Europäisches Patentamt

European Patent Office

Office européen des brevets

(19)

(11) Veröffentlichungsnummer: **0 083 301**
**B1**

(12) # EUROPÄISCHE PATENTSCHRIFT

(45) Veröffentlichungstag der Patentschrift:
08.01.86

(51) Int. Cl.⁴: **F 16 C 13/00**

(21) Anmeldenummer: **82810451.3**

(22) Anmeldetag: **27.10.82**

(54) **Walze mit elastischem Belag.**

(30) Priorität: 23.12.81 CH 8262/81
26.04.82 CH 2534/82

(43) Veröffentlichungstag der Anmeldung:
06.07.83 Patentblatt 83/27

(45) Bekanntmachung des Hinweises auf die Patenterteilung:
08.01.86 Patentblatt 86/2

(84) Benannte Vertragsstaaten:
AT BE CH DE FR GB IT LI LU NL SE

(56) Entgegenhaltungen:
DE - A - 1 627 759
DE - A - 2 058 955
GB - A - 1 046 856
US - A - 3 453 692
US - A - 3 724 983

Prospekt "ROTO Speedwell"-system
(ROSSINI-STRACHAN)

(73) Patentinhaber: **HUBER & SUHNER AG KABEL-,
KAUTSCHUK-, KUNSTSTOFF-WERKE, Degersheimer
Strasse 14, CH-9100 Herisau (CH)**

(72) Erfinder: **Graf, Rudolf, Hörnlistrasse 38,
CH-8330 Pfäffikon (CH)**

(74) Vertreter: **Isler, Fritz, Dipl.-Ing. et al,
PATENTANWALTS-BUREAU ISLER AG
Postfach 6940 Walchestrasse 23, CH-8023 Zürich (CH)**

ACTORUM AG

## Beschreibung

Die Erfindung betrifft eine Walze mit einem elastischen Belag gemäss dem Oberbegriff des Patentanspruchs 1.

In der Industrie, z.B. der Papier-, Stahl- und Textilindustrie, sowie im graphischen Gewerbe, usw. wird eine grosse Anzahl von Walzen benötigt, deren Stahlkerne mit einem weicheren, meistens elastischen Kautschuk- oder Kunststoffbelag überzogen sind. Die Beläge werden durch Aufgiessen, Aufrollen oder Aufspritzen auf die Walzenkerne aufgebracht. Um eine gute Haftverbindung mit dem Walzenkern zu erreichen, muss dieser gereinigt (entfettet), sandgestrahlt und mit einem Haftmittel belegt werden, welches eine gute Bindung zum Belag ergeben muss, der unter Wärmeeinwirkung verbunden wird. Vor dem Aufbringen des Belages ist bei gewissen Materialqualitäten, z.B. Polyurethan, eine Aufwärmung der Walzenkerne und Werkzeuge auf Temperaturen von 80 bis 100°C notwendig. Verschiedene Belagsqualitäten, z.B. Elastomere, müssen nach dem Aufbringen bei Temperaturen bis 170°C noch bis zu mehreren Stunden für den Vernetzungsprozess im Ofen verbleiben. Danach wird oft noch ein Ausreifen bei konstanten Temperaturen von 25°C notwendig, was je nach Qualität und Belagsdicke bis zu drei Wochen in Anspruch nehmen kann.

Diese aufwendigen und einrichtungsintensiven Verfahren, bei denen der Walzenkern direkt belegt wird, machen es notwendig, dass die Industrie erneuerungsbedürftige Walzen an Beschichtungswerke liefern muss. Dadurch entstehen Produktionsausfälle und, infolge der meist sehr hohen Gewichte der Kerne, die mehrere Tonnen schwer sein können und deren Länge oft bis 6 m beträgt, auch erhebliche Transportkosten.

Seit vielen Jahren wurde versucht, Beläge, auch Manchons genannt, herzustellen, welche man lagermässig führen und somit defekte Beläge in kurzer Zeit auswechseln kann. Anhand von Versuchen wurde geprüft, ob es möglich ist, Elastomer- oder Kunststoff-Manchons auf die Walzenkerne aufzukleben. Die Unterschiedlichkeit der Materialien Kunststoff/Stahl und die grossen Beanspruchungen der Walzen im Einsatz (Walkbeanspruchung und/oder hohe Drehzahlen) ergaben keine befriedigende Haftverbindung. Das Aufpressen der weichen und teilweise elastischen Manchons führte nach kurzer Zeit zum Erlahmen der Aufpresskraft, so dass die Haftung auf dem Stahlkern ganz verloren ging. Ganz abgesehen davon ist das Aufpressen nur bei relativ kurzen Manchons möglich.

Aus diesem Grund versuchte man, armierte Manchons herzustellen, indem z.B. Gewebe oder ein Lochblechzylinder in das Belagsmaterial eingebettet wurde. Das Belagsmaterial durchdringt in diesem Falle die Armierung, so dass die Innenschicht des Manchons aus dem Belagsmaterial besteht. Beim Aufpressen konnte das Erlahmen der Aufspannkraft zum Teil vermieden werden, jedoch zeigten sich Probleme in der Toleranzeinhaltung. Ferner traten Schwierigkeiten auf beim Aufpressen der Manchons auf lange Zylinder.

Die bisherige Entwicklung war hauptsächlich auf die Textilindustrie ausgerichtet, wo Spindeln und Walzen mit kleinen Durchmessern und Längen überzogen werden müssen. Sobald Walzenlängen über einige 100 mm mit den bekannten Manchons versehen wurden, stellten sich grosse Schwierigkeiten ein.

Es zeigte sich z.B., dass bei hohen Beanspruchungen (Liniendrücke bis zu 100 N/mm) infolge der Walkarbeit die Manchons sich stark erwärmten (bis 80°C) und wegen des unterschiedlichen Wärmeausdehnungskoeffizienten zum Stahl sich vom Walzenkern lösten.

Dieses Problem entsteht beim konventionellen direkten Aufvulkanisieren des Belages auf den Walzenkern nicht, da nach dem Aufvulkanisieren ein Wärmeschwund eintritt, der zu einer Vorspannung führt, welcher die unterschiedlichen Wärmeausdehnungen im Betrieb ausgleicht.

Aus dem Prospekt «ROTO speedwell» von ROSSINI-STRACHAN ist eine Walze gemäss Oberbegriff des Anspruchs 1 bekannt. Solche Walzen sind seit etwa 1980 auf dem Markt. Die Walze besteht aus einem schwach konischen, mit Axial- und Radialbohrungen versehenen Walzenkern und einem Belag. Der Belag hat einen elastomeren Mantel und ein flüssigkeitsundurchlässiges Armierungsrohr mit einer konischen Längsbohrung. Zum Aufziehen eines neuen Belages wird dieser bis zum Festsitz auf den Kern aufgeschoben, hierauf mittels über die Bohrungen zugeführter Druckluft aufgeweitet und axial in die gewünschte Position geschoben. Diese Walze ist vor allem für Anwendungen mit häufigem Belagwechsel zum Anpassen der Breite an die Bahnbreite in der Druckindustrie geeignet. Für hohe Linienpressungen, hohe Drehzahlen und für korrigierbare Biegepresseure eignet sich diese Walze nicht. Sie erfordert eine hohe Präzision sowohl des Kerns als auch der Bohrung des Armierungsrohres.

Aufgabe der Erfindung ist es, einen elastischen Belag für eine Walze zu schaffen, der aus Festigkeitsgründen armiert ist und eine innere Schicht aufweist, welche eine einwandfreie Verbindung mit der Walze ermöglicht und zugleich grössere Toleranzen aufnehmen kann als bekannte Beläge. Der Belag soll bei der Anwenderindustrie gelagert und bei Bedarf in kurzer Zeit auf die Walze aufgezogen werden können, ohne dass diese an das Beschickungswerk geschickt werden muss. Wichtig ist eine einwandfreie Haftung des Belages auf der Walze auch bei sehr starker Belastung.

Die Lösung dieser Aufgabe erfolgt erfindungsgemäss durch die in der Kennzeichnung des Patentanspruchs 1 definierten Merkmale.

Vorteilhafte Weiterbildungen der erfindungsgemässen Walze sind den Ansprüchen 2 bis 13 zu entnehmen. Ein Verfahren zur Herstellung der erfindungsgemässen Walze ist in den Ansprüchen 14 bis 25 wiedergegeben.

Nachfolgend werden anhand der Zeichnungen Ausführungsbeispiele der Erfindung näher erläutert. Es zeigen:

Fig. 1 schematisch ein erstes Ausführungsbeispiel für die Herstellung des elastischen Belages,

Fig. 2 die Montage des Belages gemäss Fig. 1 auf einen Walzenkern,

Fig. 3 eine mit dem Belag überzogene Walze,

Fig. 4 eine weitere Ausführungsform für die Belagsherstellung,

Fig. 5 das Aufziehen des Belages gemäss Fig. 4 auf einen Walzenkern,

Fig. 6 einen Querschnitt durch das bandförmige Ausgangsmaterial für ein drittes Ausführungsbeispiel eines elastischen Belages,

Fig. 7 und 8 schematisch die Herstellung eines Belages mit dem Band gemäss Fig. 6, und

Fig. 9 einen aus Bandmaterial gefertigten Belag.

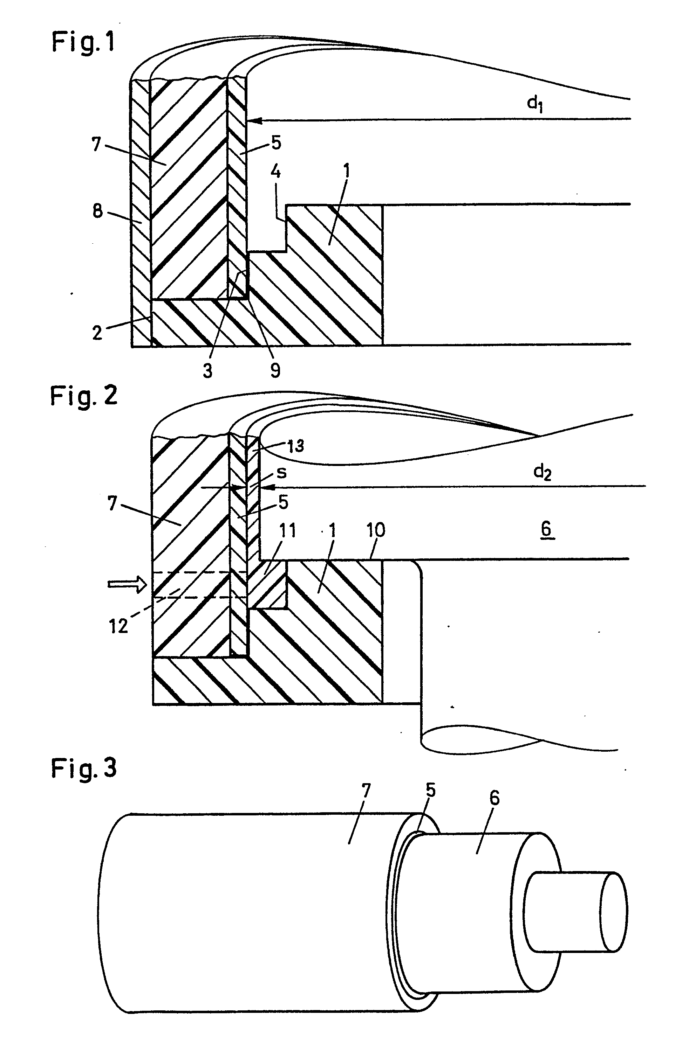

Zur Herstellung des Belages, auch Manchon genannt, wird gemäss Fig. 1 zuerst ein Ringboden 1 aus Polyurethan gegossen. Der Aussenumfang des Ringbodens 1 ist stufenartig abgesetzt, wobei drei Ringstufen 2, 3, 4 mit unterschiedlichen Durchmessern vorgesehen sind.

Als innere Armierung des Manchons dient ein Rohr 5 aus glasfaserverstärktem Polyester, dessen Innendurchmesser $d_1$ etwa 1 bis 5 mm grösser ist als der Aussendurchmesser $d_2$ der zu beschickenden Stahlwalze 6. Das Polyesterrohr ist wärmestabil und absolut starr bis zu Temperaturen von 120°C. Es ist flüssigkeitsundurchlässig und verbindet sich vollständig mit dem Mantelmaterial 7 des Manchons. Sein Wärmeausdehnungskoeffizient ist vergleichbar demjenigen von Stahl (Wärmeausdehnungskoeffizient von Stahl: ca. $12{,}0 \times 10^{-6}/°C$). Zweckmässigerweise soll der Wärmeausdehnungskoeffizient des Polyesterrohres $\leq 15{,}0 \times 10^{-6}/°C$ sein. Die Dicke des Rohres beträgt 1 bis 4 mm.

Statt des glasfaserverstärkten Polyesterrohres könnte auch ein anderes starres Material, z.B. eine Blechhülse vorgesehen sein. Die Herstellung und Aufbereitung der Hülse ist jedoch relativ teuer und die Haftung mit dem Polyurethanmaterial und dem Klebstoff kann nur über aufwendige Vorbehandlungen erreicht werden, was beim Polyesterrohr 5 nicht nötig ist. Das Ende des Polyesterrohres 5 wird nun auf die zweite Ringstufe 3 des Ringbodens 1 gesteckt, wobei das Polyesterrohr als verlorene Schalung dient. Es kann z.B. mit einem Epoxykleber 9 mit dem Ringboden 1 dicht verklebt werden.

Auf die äusserste Ringstufe 2 wird das Ende eines Stahlrohres 8 aufgeschoben, als äussere Schalung für das Polyurethan-Mantelmaterial, das nun bei einer Temperatur von 80 bis 120°C warm eingegossen wird und sich mit dem Ringboden 1 verbindet. Nach dem Vergiessen und Vernetzen, was ca. 8 bis 10 Stunden dauert, kann der fertige Manchon, bestehend aus dem Mantel 7, der Armierung 5 und dem Ringboden 1 von der äusseren Schalung 8 abgezogen werden. Infolge des warmen Vergiessens stellt sich nach dem Erkalten ein Wärmeschwund ein, der zu einer Vorspannung des Mantels auf der Armierung führt.

Der Manchon wird nun an einen Anwenderbetrieb geliefert und dort bis zum Gebrauch gelagert. Bei Bedarf kann der Manchon sofort auf den Walzenkern montiert werden, wie in der Fig. 2 schematisch gezeigt wird.

Der Manchon wird auf den Walzenkern 6 aufgeschoben, bis der Ringboden 1 die Walzenstirnfläche 10 berührt. Das Spiel s zwischen der Walzenoberfläche und der Innenfläche des Manchons beträgt 0,5 bis 2,5 mm. Zweckmässigerweise wird der Manchon auf dem Walzenkern noch zentriert, damit das Spiel bzw. der Spalt 13 rundum ausgeglichen ist. Der Manchon kann jetzt senkrecht gestellt werden. Nun wird im Bereich des Ringraumes 11, der durch die dritte Stufe 4 des Ringbodens 1 und die Walzenstirnfläche 10 begrenzt wird, der Manchon durchbohrt. Durch diese Bohrung 12 wird ein lösungsmittelfreier Klebstoff auf Polyester-, Epoxy- oder Polyurethanbasis unter einem Druck bis zu 10 atü in den Ringraum 11 eingepresst. Der Klebstoff sollte nicht zu dickflüssig sein. Bewährt hat sich eine Viskosität unter 2500 cp. Der Klebstoff fliesst nun im Spalt 13 nach oben und füllt diesen vollständig aus.

Ausgedehnte Versuche haben gezeigt, dass sich der Manchon auch bei starker Beanspruchung und Erwärmung nicht vom Walzenkern löst. Da der Polyurethanmantel 7 mit Vorspannung auf dem starren Armierungsrohr 5 angeordnet ist, führt eine Erwärmung höchstens zu einer Reduktion der Vorspannung, nicht aber zum Lösen vom Armierungsrohr 5. Das letztere, das einen vergleichbaren Wärmeausdehnungskoeffizient wie der Stahlkern besitzt, dehnt sich gleichmässig mit diesem aus und kann sich daher ebenfalls nicht vom Kern lösen. Der unter Druck eingepresste Klebstoff stellt eine sichere Verbindung zwischen der Armierung und dem Walzenkern her.

Nachstehend werden die Vorteile des vorbeschriebenen Manchons nochmals zusammengefasst:

— Der Manchon kann an Ort und Stelle durch den Benützer auf den Walzenkern aufgesetzt, bei Raumtemperatur verklebt und anschliessend überdreht und/oder überschliffen werden. Das Aushärten des Klebstoffes erfolgt innert weniger Stunden. Das umständliche Zurückschicken der Walze ans Beschickungswerk entfällt.

— Der Manchon ist für das rasche Beziehen von kleinen bis grössten Walzenkernen geeignet.

— Er haftet hervorragend auf dem Stahlkern und erträgt höchste Liniendrücke und Walkbeanspruchungen.

— Er kann im voraus hergestellt und beim Verbraucher gelagert werden, wodurch der Produktionsausfall bei der Belagserneuerung verringert und der Transport verbilligt wird.

— Teure Vorbehandlungsarbeiten wie Sandstrahlen, Haftmittel auftragen, usw. entfallen. Die Oberfläche des Walzenkernes benötigt keine spezielle Struktur, es genügt, wenn die Oberfläche gedreht und anschliessend entfettet wird. Kleinere Durchmesserunterschiede werden durch die Klebstoffschicht ausgeglichen.

— Der Manchon ist qualitativ und preislich äusserst wirtschaftlich herstellbar.

— Da zwischen dem Walzenkern und dem Manchon ein grosses Spiel von zwischen 0,5 bis 2,5 mm vorhanden ist, sind die Anforderungen an die Herstellungstoleranzen relativ klein.

— Die Stahlkerne müssen beim Vernetzen des Belages nicht auf Temperaturen von 80 bis 170°C aufgewärmt werden.

— Die Manchons müssen nicht auf die Walzen aufgepresst werden, sondern können einfach, ohne Kraftanwendung, über diese aufgeschoben werden.

— Bei Verwendung von farblosem Polyestermaterial für das Armierungsrohr lässt sich die Haftung des Polyurethanmantels auf dem Armierungsrohr kontrollieren. Eine solche einfache Sichtkontrolle ist beim Direktaufgiessen des Belages auf den Walzenkern nicht möglich.

— Bei Walzen, die als Tiefdruckpresseure verwendet werden, bilden das Armierungsrohr und der Klebstoff eine elektrisch isolierende Schicht gegenüber dem Polyurethanmantel und dem Walzenkern. Bekanntlich werden im Tiefdruck elektrostatische Druckhilfen eingesetzt zur Verbesserung der Druckqualität. Bisher musste die äussere, leitende Schicht des Polyurethanbelages (die Leitfähigkeit wird z.B. durch Beimischung von Russ erzielt) auf eine innere, isolierende Polyurethanschicht aufgegossen werden. Dieser teure, doppelte Giessvorgang kann nun vermieden werden.

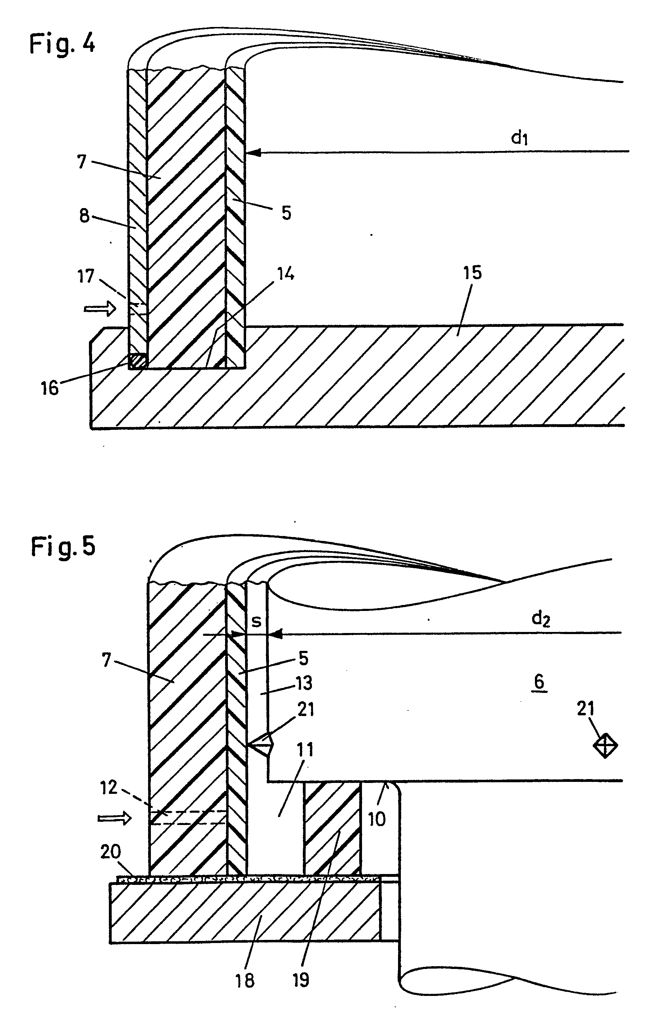

Bei einem weiteren Ausführungsbeispiel gemäss den Fig. 4 und 5 werden das armierte Rohr 5 und das Stahlrohr 8 senkrecht in die Ringnut 14 einer Stahlplatte 15 gesteckt, wobei zwischen dem Ende des Stahlrohres 8 und dem Boden der Ringnut 14 noch ein Dichtring 16 angeordnet ist. Die Ringnut 14 und die innere Fläche des Stahlrohres 8 werden mit Silikon bestrichen, um das spätere Entfernen des Manchons zu erleichtern.

Das Vergiessen des Zwischenraumes zwischen den beiden Rohren 5, 8 erfolgt von unten nach oben durch die Öffnung 17 im unteren Teil des Stahlrohres 8. Dies hat den Vorteil, dass der Giessvorgang genau gesteuert und kontrolliert durchgeführt werden kann, was insbesondere bei anspruchsvollen Polyurethanqualitäten wichtig ist. Die Vernetzung erfolgt dann ebenfalls kontrolliert von unten nach oben.

Hier zeigt sich einer der Vorteile des neuen Verfahrens. Beim bekannten Aufgiessen des Mantels direkt auf den Walzenkern bestand die Gefahr der Rissbildung und Haftablösung wegen der Wärme- und Schwundspannungen beim ungleichmässigen Abkühlen. Je nach Grösse und Volumen des Walzenkernes musste mit einem unterschiedlichen Wärmepotential desselben gerechnet werden, was den Vernetzungsprozess stark beeinflusste. Diese Einflüsse konnten jeweils nur nach mehreren Giessversuchen mit entsprechenden Verlusten einigermassen erfasst werden. Beim dünnen Amierungsrohr hingegen ist das Wärmepotential klein und lässt sich beim Giessvorgang gut beherrschen.

Zum Aufbringen des fertigen Manchons 5, 7 auf den Walzenkern 6 wird dieser senkrecht auf eine Platte 18 gestellt, wobei zwischen der Platte und dem Ende 10 des Walzenkernes 6 ein Polyurethanstützring 19 angeordnet ist, dessen Aussendurchmesser kleiner ist als der Kerndurchmesser des Manchons. Auf der Platte 18 befindet sich ein Dichtfilz 20.

Zum Zentrieren des Manchons werden auf der Oberfläche des Walzenkernes 6 Kunststoffnocken 21 auf Epoxybasis aufgeklebt und zwar unten und oben je drei bis sechs, bei längeren Walzen evtl. zusätzlich noch mittig weitere drei bis sechs.

Nun wird der Manchon über den Walzenkern 6 gestülpt und wieder durch Einpressen von Klebstoff mit diesem fest verbunden. Um ein Abheben des Manchons beim Klebvorgang zu verhindern, wird dieser zweckmässig nach unten gegen die Platte 18 gespannt. Nach dem Aushärten des Klebstoffes wird die Walze mit dem Manchon überdreht und/oder überschliffen. Unten und oben wird der Überguss abgetrennt, so dass der Manchon mit dem Walzenende 10 bündig ist. Durch die Nocken 21 wird eine einwandfreie Zentrierung des Manchons auf dem Walzenkern gewährleistet.

Bei Belagserneuerungen muss zur Entfernung des alten Belages die Walze bis auf den Walzenkern abgedreht werden, wobei meist auch beim Walzenkern ein Span abgenommen wird. Aus diesem Grund weisen die Walzenkerne älterer Walzen zunehmend kleinere Durchmesser auf, was aber beim vorliegenden Verfahren zur Erneuerung des Belages keine Rolle spielt. Der nun etwas grössere Ringspalt 13 verlangt lediglich etwas mehr Klebstoff und zum Zentrieren des Manchons werden entsprechend höhere Nocken 21 aufgeklebt.

Bei kleinen Walzen kann unter Umständen auf das Einpressen des Klebstoffes verzichtet werden. Der Manchon kann dann innen mit einer Schicht aus einem saugfähigen, kompressiblen Stoff, z.B. einem Filzmaterial oder einem Gewebe ausgekleidet sein. Zum Überziehen der Walze wird die saugfähige Schicht mit Klebstoff getränkt und der Manchon auf die Walze aufgezogen, wobei der Klebstoff als Schmiermittel für das Aufziehen dient.

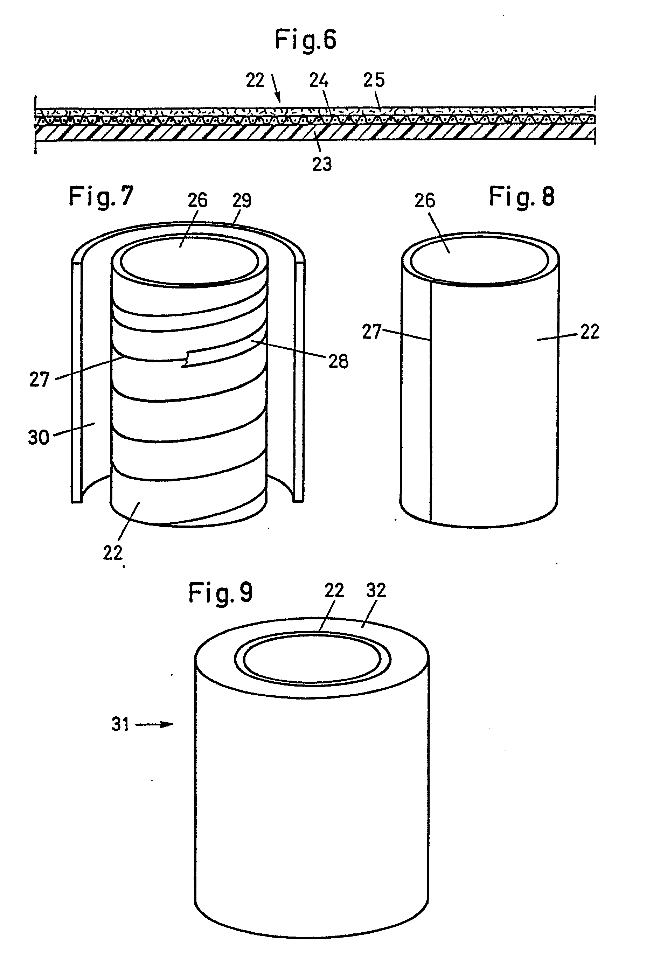

Anhand der Fig. 6 bis 9 wird nachstehend die Herstellung eines Manchons beschrieben, der eine saugfähige Schicht aufweist. Bei der Herstellung des Manchons wird von einem bandförmigen Armierungsmaterial 22 ausgegangen, welches aus einem Polyesterfilz 23, einem Gittergewebe 24 und einer auf das letztere aufkaschierten Deckschicht 25 aus Polyurethan besteht. Das Armierungsband 22, welches je nach Walzendurchmesser ca. 2 bis 3 mm dick ist, wird auf einem Dorn, z.B. ein Stahlrohr 26, aufgewickelt, wobei der Filz innen und die Deckschicht aussen ist.

Die Stosskanten 27 werden mit einem schmalen Bändchen aus Polyurethanfolie 28 abgedeckt und quellverschweisst. Dadurch wird verhindert, dass beim Aufgiessen, Aufpressen und während des Vernetzungsprozesses des Manchon-Materials der Filz von diesem durchdrungen wird. Ein Durchdringen würde das spätere Verkleben nämlich in Frage stellen.

Bei einem anderen Verfahren gemäss Fig. 8 wird ein breiteres Band 22 um den Dorn 26 gelegt und die Stosskante 27 ebenfalls abgedeckt, verklebt oder verschweisst.

Der beschichtete Dorn 26 wird jetzt in ein Rohr 29 grösseren Durchmessers gestellt, und der Zwischenraum 30 mit Polyurethan ausgegossen. Zweckmässigerweise steht das grössere Rohr 29 in einem Ofen, so dass direkt im Ofen vergossen werden kann. Nach dem Vergiessen und Vernetzen, was ca. 8 bis 10 Stunden dauert, kann der fertige Manchon 31, bestehend aus dem Mantel 32 und der Armierungsschicht 22, abgezogen werden.

Das Mantelmaterial kann auch aufgespritzt werden. Statt aus Polyurethan kann der Mantel auch aus Kautschuk bestehen, welcher aufgerollt und vulkanisiert wird.

Der fertige Manchon erlaubt eine einwandfreie Verklebung mit der Walze und nimmt auch grössere Toleranzunterschiede auf. Vor dem Aufziehen wird die saugfähige, kompressible Innenschicht vollständig mit Klebstoff getränkt. Der flüssige Klebstoff wirkt als Schmierung, so dass der Manchon ohne grossen Kraftaufwand auf den Walzenkern aufgezogen werden kann. Die komprimierbare Polyesterschicht ermöglicht ein gewisses Spiel, welches zum Aufziehen notwendig ist. Das Aushärten des Klebstoffes erfolgt bei Raumtemperatur innert weniger Stunden.

Wie bei den ersten Ausführungsbeispielen gemäss den Fig. 1 bis 5 besteht auch dieser Belag aus dem elastischen Mantelmaterial 32, mit dem Klebstoff durchtränkten Filz als Armierung sowie einer dünnen Klebstoffschicht zwischen der Armierung und dem Walzenkern. Die nach dem Aushärten des Klebstoffes starre Armierung hat einen Wärmeausdehnungskoeffizienten, der mindestens annähernd demjenigen des Walzenkernes entspricht.

## Patentansprüche

1. Walze mit einem Walzenkern (6) und einem darauf angeordneten elastischen Belag (7), wobei der Belag einen Mantel aus einem elastomeren Material und ein starres, flüssigkeitsundurchlässiges, inneres Armierungsrohr (5, 22) aufweist, dadurch gekennzeichnet, dass der Wärmeausdehnungskoeffizient des Rohres (5, 22) mindestens annähernd demjenigen des Walzenkernes (6) entspricht, und dass zwischen dem Rohr (5, 22) und dem Walzenkern (6) ein mit Klebstoff gefüllter Ringspalt (13) angeordnet ist.

2. Walze nach Anspruch 1, dadurch gekennzeichnet, dass der Walzenkern (6) aus Stahl ist und dass das Armierungsrohr (5) ein glasfaserverstärktes Polyesterrohr ist, dessen Wärmeausdehnungskoeffizient $\leq 15,0 \times 10^{-6}/°C$ ist.

3. Walze nach Anspruch 1, dadurch gekennzeichnet, dass auf dem Walzenkern (6) in den Ringspalt (13) ragende Nocken (21) aufgeklebt sind, deren Höhe der Dicke (s) des Ringspaltes (13) entsprechen zwecks Zentrierung des Belages auf dem Walzenkern.

4. Walze nach Anspruch 1, dadurch gekennzeichnet, dass die Dicke des Rohres (5) 1 bis 4 mm beträgt und dass der Innendurchmesser ($d_1$) des Rohres (5) um 1 bis 5 mm grösser ist als der Durchmesser ($d_2$) des Walzenkernes (6).

5. Walze nach Anspruch 1, dadurch gekennzeichnet, dass der Klebstoff ein lösungsmittelfreier Klebstoff auf Polyester-, Epoxy- oder Polyurethanbasis ist.

6. Walze nach Anspruch 1, dadurch gekennzeichnet, dass der Belag mit einem Ringboden (1) versehen ist, auf welchem die Walzenstirnfläche (10) aufliegt, wobei zwischen dem Ringboden (1) und der Stirnfläche (10) ein Ringraum (11) gebildet ist zur Aufnahme und Verteilung des Klebstoffes.

7. Walze nach Anspruch 6, dadurch gekennzeichnet, dass im Belag mindestens eine in den Ringraum (11) mündende Bohrung (12) vorgesehen ist, durch welche der Klebstoff in den Ringraum (11) einführbar ist.

8. Walze nach Anspruch 1, dadurch gekennzeichnet, dass das elastomere Mantelmaterial (7) Polyurethan ist.

9. Walze nach Anspruch 1, dadurch gekennzeichnet, dass das Mantelmaterial infolge Wärmeschwunds mit Vorspannung auf dem Rohr (5) sitzt.

10. Walze nach Anspruch 1, dadurch gekennzeichnet, dass das Armierungsrohr (22) eine innere Schicht aus einem saugfähigen, kompressiblen Stoff (23) umfasst, sowie eine äussere, dem Mantelmaterial benachbarte Deckschicht (25) aus einem flüssigkeitsundurchlässigen Material.

11. Walze nach Anspruch 10, dadurch gekennzeichnet, dass zwischen der Deckschicht (25) und dem Stoff (23) ein Gittergewebe (24) angeordnet ist, auf welchem die Deckschicht (25) aufkaschiert ist.

12. Walze nach Anspruch 10, dadurch gekennzeichnet, dass der Stoff (23) ein Filz ist, und dass die Deckschicht (25) aus einem thermoplastisch verbindbaren Material besteht, das mit dem Mantelmaterial eine vollständige Bindung eingeht.

13. Walze nach Anspruch 12, dadurch gekennzeichnet, dass der Filz (23) ein Polyesterfilz ist, und dass die Deckschicht aus Polyurethan besteht.

14. Verfahren zur Herstellung der Walze mit dem Belag nach einem oder mehreren der Ansprüche 1 bis 9, dadurch gekennzeichnet, dass der Belag vorgefertigt wird und anschliessend auf den Walzenkern (6) aufgeschoben wird, und dass der Klebstoff durch mindestens eine Bohrung (12) im Belag mit Druck in den Ringspalt (13) gepresst wird, von wo er sich gleichmässig zwischen dem Rohr (5) und dem Walzenkern (6) verteilt.

15. Verfahren nach Anspruch 14, dadurch gekennzeichnet, dass auf dem Walzenkern mindestens unten und oben eine Anzahl den Belag zentrierender Nocken aufgeklebt werden bevor der Belag aufgeschoben wird.

16. Verfahren nach Anspruch 14, dadurch gekennzeichnet, dass der Klebstoff mit bis zu 10 bar Überdruck in den Ringspalt gepresst wird, wobei seine Viskosität unter 2,5 Pas liegt.

17. Verfahren nach Anspruch 14, dadurch gekennzeichnet, dass der Klebstoff in einen Ringraum gepresst wird, der unterhalb des Ringspaltes angeordnet ist und mit diesem in Verbindung steht, wobei der Klebstoff im Ringspalt von unten nach oben fliesst.

18. Verfahren nach Anspruch 14, dadurch gekennzeichnet, dass zur Vorfertigung des Belages das Mantelmaterial in eine Form gegossen wird, welche durch ein inneres glasfaserverstärktes, als verlorene Schalung dienendes Polyesterrohr (5) und ein äusseres Schalungsrohr (8) gebildet wird, und dass nach dem Vernetzen und Abkühlen des Mantelmaterials der Belag bestehend aus dem Mantel (7) und dem Rohr (5) von der Aussenschaltung (8) abgezogen wird.

19. Verfahren nach Anspruch 18, dadurch gekennzeichnet, dass zur Bildung der Form ein am Aussenumfang abgestufter Ringboden (1) aus Polyurethan hergestellt wird, dass das Ende des glasfaserverstärkten Polyesterrohres (5) über eine innere Stufe (3) des Ringbodens aufgesetzt wird und dass das Ende des als äussere Schalung dienenden Rohres (8) auf die äusserste Stufe (2) des Ringbodens aufgeschoben wird.

20. Verfahren nach Anspruch 18, dadurch gekennzeichnet, dass das innere Polyesterrohr (5) und das äussere Schalungsrohr (8) zur Bildung der senkrechten Form in eine Ringnut (14) einer Bodenplatte (15) gesteckt werden und dass anschliessend das Polyurethan-Mantelmaterial durch eine untere seitliche Öffnung im äusseren Schalungsrohr eingeführt wird, so dass der Giessvorgang von unten nach oben erfolgt.

21. Verfahren nach Anspruch 14, dadurch gekennzeichnet, dass das Polyesterrohr (5) innen mit einer Schicht aus einem saugfähigen, kompressiblen Stoff versehen wird, dass diese Schicht mit Klebstoff getränkt wird, und dass der Belag dann auf die Walze aufgeschoben wird.

22. Verfahren zur Herstellung der Walze mit dem Belag nach einem oder mehreren der Ansprüche 10 bis 13, dadurch gekennzeichnet, dass die bandförmige oder rechteckige Armierung auf einen Dorn aufgewickelt oder um diesen gelegt wird, dass die Stosskanten dicht verklebt oder verschweisst werden, dass anschliessend das Mantelmaterial aufgebracht wird und dass der so vorgefertigte Belag auf dem Walzenkern montiert wird.

23. Verfahren nach Anspruch 22, dadurch gekennzeichnet, dass die Stosskanten der Armierung mit einem Folienbändchen abgedeckt und mit der Deckschicht verschweisst werden.

24. Verfahren nach Anspruch 22, dadurch gekennzeichnet, dass das Mantelmaterial aufgegossen, aufgerollt oder aufgespritzt wird.

25. Verfahren nach Anspruch 22, dadurch gekennzeichnet, dass die Armierungsschicht mit Klebstoff getränkt wird und der Belag dann auf den Walzenkern aufgezogen wird.

**Revendications**

1. Rouleau comportant un noyau (6) sur lequel est disposé un revêtement élastique (7), ce revêtement comportant une enveloppe en matière élastomère et un tube intérieur (5, 22) d'armature rigide et imperméable aux liquides, caractérisé en ce que le coefficient de dilatation thermique du tube (5, 22) est au moins approximativement égal à celui du noyau (6) de rouleau et en ce qu'il est prévu entre le tube (5, 22) et le noyau (6) de rouleau un intervalle annulaire (13) rempli d'adhésif.

2. Rouleau selon la revendication 1, caractérisé en ce que le noyau (6) de rouleau est en acier et en ce que le tube (5) d'armature est un tube en polyester à armature de fibres de verre, dont le coefficient de dilatation thermique est $\le$ à $15,0 \times 10^{-6}/^\circ$C.

3. Rouleau selon la revendication 1, caractérisé en ce que sur le noyau (6) de rouleau sont collés des plots (21) faisant saillie dans l'intervalle annulaire (13) et dont la hauteur correspond à l'épaisseur (s) de l'intervalle annulaire (13) en vue d'un centrage du revêtement sur le noyau de rouleau.

4. Rouleau selon la revendication 1, caractérisé en ce que l'épaisseur du tube (5) est comprise entre 1 et 4 mm et en ce que le diamètre intérieur ($d_1$) du tube (5) est supérieur de 1 à 5 mm au diamètre ($d_2$) du noyau (6) de rouleau.

5. Rouleau selon la revendication 1, caractérisé en ce que l'adhésif est un adhésif exempt de solvant, à base de polyester, d'époxyde ou de polyuréthanne.

6. Rouleau selon la revendication 1, caractérisé en ce que le revêtement est pourvu d'un fond annulaire (1) sur lequel s'appuie la surface frontale (10) de rouleau, et en ce qu'il est prévu entre le fond annulaire (1) et la surface frontale (10) un volume annulaire (11) pour recevoir et répartir l'adhésif.

7. Rouleau selon la revendication 6, caractérisé en ce qu'il est prévu dans le revêtement au moins un trou (12) débouchant dans le volume annulaire (11) et par lequel l'adhésif peut être introduit dans le volume annulaire (11).

8. Rouleau selon la revendication 1, caractérisé en ce que la matière élastomère d'enveloppe (7) est du polyuréthanne.

9. Rouleau selon la revendication 1, caractérisé en ce que la matière d'enveloppe est fixée, par suite du retrait thermique, avec précontrainte sur le tube (5).

10. Rouleau selon la revendication 1, caractérisé en ce que le tube (22) d'armature comporte un couche intérieure formée d'une matière (23) compressible et à pouvoir d'absorption ainsi qu'une couche extérieure de recouvrement (25) adjacente à la matière d'enveloppe et constituée d'un matériau imperméable aux liquides.

11. Rouleau selon la revendication 10, caractérisé en ce qu'il est prévu entre la couche de recouvrement (25) et la matière (23) un tissu en treillis (24) sur lequel est déposée la couche de recouvrement (25).

12. Rouleau selon la revendication 10, caractérisé en ce que la matière (23) est un feutre et en ce que la couche de recouvrement (25) est constituée d'un matériau pouvant être lié thermoplastiquement et qui établit avec la matière d'enveloppe une liaison complète.

13. Rouleau selon la revendication 12, caractérisé en ce que le feutre (23) est un feutre de polyester et en ce que la couche de recouvrement se compose de polyuréthanne.

14. Procédé de fabrication du rouleau pourvu du revêtement conformément à l'une quelconque des revendications 1 à 9, caractérisé en ce que le revêtement est préfabriqué et est engagé ensuite sur le noyau (6) de rouleau et en ce que l'adhésif est injecté par au moins un trou (12) ménagé dans le revêtement sous pression dans l'intervalle annulaire (13), à partir duquel il se répartit uniformément entre le tube (5) et le noyau (6) de rouleau.

15. Procédé selon la revendication 14, caractérisé en ce que, sur le noyau de rouleau, sont collés au moins en bas et en haut un certain nombre de plots centrant le revêtement avant que celui-ci soit emmanché.

16. Procédé selon la revendication 14, caractérisé en ce que l'adhésif est injecté dans l'intervalle annulaire avec une surpression pouvant aller jusqu'à 10 bars, sa viscosité étant inférieure à 2,5 Pas.

17. Procédé selon la revendication 14, caractérisé en ce que l'adhésif est injecté dans un volume annulaire qui est disposé en-dessous de l'intervalle annulaire et qui est relié à celui-ci, l'adhésif s'écoulant dans l'intervalle annulaire de bas en haut.

18. Procédé selon la revendication 14, caractérisé en ce que, pour la préfabrication du revêtement, la matière d'enveloppe est coulée dans un moule, qui est constitué par un tube intérieur (5) en polyester à armature de fibres de verre et servant de coffrage perdu, et par un tube extérieur (8) servant de coffrage et en ce que, à après la réticulation et le refroidissement de la matière d'enveloppe, le revêtement se composant de l'enveloppe (7) et du tube (5) est retiré du coffrage extérieur (8).

19. Procédé selon la revendication 18, caractérisé en ce que, pour la formation du moule, un fond annulaire (1) en polyuréthanne, étagé sur sa périphérie extérieure, est fabriqué, en ce que l'extrémité du tube (5) en polyester à armature de fibres de verre est placée sur un gradin intérieur (3) du fond annulaire et en ce que l'extrémité du tube (8) servant de coffrage extérieur est engagée sur le gradin complètement extérieur (2) du fond annulaire.

20. Procédé selon la revendication 18, caractérisé en ce que le tube intérieur (5) en polyester et le tube extérieur (8) servant de coffrage sont engagés, pour la formation du moule vertical, dans une rainure annulaire (14) d'une plaque (15) de fond et en ce qu'ensuite la matière d'enveloppe constituée par du polyuréthanne est introduite par une ouverture latérale inférieure dans le tube extérieur de coffrage, de façon que le processus de coulée s'effectue du bas vers le haut.

21. Procédé selon la revendication 14, caractérisé en ce que le tube (5) en polyester est pourvu intérieurement d'une couche d'une matière commpressible et à pouvoir d'absorption, en ce que cette couche est imprégnée d'adhésif et en ce que le revêtement est ensuite engagé sur le rouleau.

22. Procédé de fabrication du rouleau pourvu du revêtement selon l'une quelconque des revendications 10 à 13, caractérisé en ce que le renforcement en forme de bande ou rectangulaire est enroulé sur un mandrin ou bien est mis en place autour de celui-ci, en ce que les bords de jonction sont collés ou soudés de façon étanche, en ce qu'ensuite la matière d'enveloppe est mise en place et en ce que le revêtement ainsi préfabriqué est monté sur le noyau de rouleau.

23. Procédé selon la revendication 22, caractérisé en ce que les bords de jonction de l'armature sont recouverts avec une petite bande tirée d'une feuille et sont soudés avec la couche de recouvrement.

24. Procédé selon la revendication 22, caractérisé en ce que la matière d'enveloppe est déposée par coulée, par enroulement ou par projection de pulvérisation.

25. Procédé selon la revendication 22, caractérisé en ce que la couche d'armature est imprégnée d'adhésif et en ce que le revêtement est ensuite emmanché sur le noyau de rouleau.

**Claims**

1. Roller with a roller core (6) and a resilient covering (7) arranged thereon, the covering comprising an outer sleeve of an elastomer material and a rigid, liquid-impermeable inner reinforcement tube (5, 22), characterised in that the heat expansion coefficient of the tube (5, 22) corresponds at least approximately to that of the roller core (6), and that an annular gap (13) which is filled with adhesive is provided between the tube (5,22) and the roller core (6).

2. Roller according to claim 1, characterised in that the roller core (6) is made of steel and that the reinforcement tube (5) is a glass-fibre-reinforced polyester tube, the heat expansion coefficient of which is $\leq 15.0 \times 10^{-6}/^\circ C$.

3. Roller according to claim 1, characterised in that cams (21), which project into the annular gap (13) and the height of which corresponds to the thickness (s) of the annular gap (13) in order to centre the covering on the roller core, are stuck on the roller core.

4. Roller according to claim 1, characterised in that the thickness of the tube (5) is 1 to 4 mm and that the inner diameter ($d_1$) of the tube (5) is 1 to 5 mm greater than the diameter ($d_2$) of the roller core (6).

5. Roller according to claim 1, characterised in that the adhesive is a solvent-free adhesive with a polyester, epoxy or polyurethane base.

6. Roller according to claim 1, characterised in that the covering is provided with an annular base (1), on which the roller end face (10) is supported, an annular space (11) being formed between the annular base (1) and the end face (10) for receiving and distributing the adhesive.

7. Roller according to claim 6, characterised in that at least one bore (12), which opens out into the annular space (11) and through which the adhesive can be introduced into the annular space (11), is provided in the covering.

8. Roller according to claim 1, characterised in that the elastomer material of the outer sleeve (7) is polyurethane.

9. Roller according to claim 1, characterised in that the material of the outer sleeve is mounted on the tube (5) as a result of thermal contraction with prestressing.

10. Roller according to claim 1, characterised in that the reinforcement tube (22) encloses an inner layer of an absorbent, compressible substance (23), and an outer covering layer (25) which is adjacent the material of the outer sleeve and which is made of a liquid-impermeable material.

11. Roller according to claim 10, characterised in that a latticed fabric (24), on which the covering layer (25) is bonded, is arranged between the covering layer (25) and the substance (23).

12. Roller according to claim 10, characterised in that the substance (23) is a felt, and that the covering layer (25) comprises a thermoplastically bondable material, which forms a complete bond with the material of the outer sleeve.

13. Roller according to claim 12, characterised in that the felt (23) is a polyester felt, and that the covering layer consists of polyurethane.

14. Method of producing the roller with the covering according to one or more of claims 1 to 9, characterised in that the covering is prefabricated and is then pushed onto the roller core (6), and that the adhesive is forced by pressure through at least one bore (12) in the covering into the annular gap (13), from where it is distributed evenly between the tube (5) and the roller core (6).

15. Method according to claim 14, characterised in that a plurality of cams which centre the covering are stuck on the roller core at least above and below before the covering is pressed on.

16. Method according to claim 14, characterised in that the adhesive is pressed into the annular gap with up to 10 bar additional pressure, its viscosity being under 25 Pas.

17. Method according to claim 14, characterised in that the adhesive is forced into an annular space which is arranged below the annular gap and communicates therewith, the adhesive in the annular gap flowing upwards from below.

18. Method according to claim 14, characterised in that in order to prefabricate the covering the material of the outer sleeve is poured into a mould which is formed by an inner glass-fibre-reinforced polyester tube (5) which acts as a break-mould, and an outer casing mould (8), and that after the material of the outer sleeve has been cross-linked and cooled, the covering comprising the outer sleeve (7) and the tube (5) is removed from the outer mould (8).

19. Method according to claim 18, characterised in that in order to form the mould an annular base (1) which is stepped on the outer circumference is produced from polyurethane, that the end of the glass-fibre-reinforced polyester tube (5) is attached by means of an inner step (3) of the annular base and that the end of the tube (8) which acts as the outer mould is pushed onto the outermost step (2) of the annular base.

20. Method according to claim 18, characterised in that the inner polyester tube (5) and the outer tube mould (8) are inserted into an annular groove (14) of a base plate (15) in order to form the vertical mould and that the polyurethane material of the outer sleeve is then inserted through a lower lateral opening in the outer tube mould, so that the casting cycle is carried out from the bottom to the top.

21. Method according to claim 14, characterised in that the polyester tube (5) is provided inside with a layer comprising an absorbent, compressible substance, that this layer is impregnated with adhesive, and that the covering is pressed onto the roller.

22. Method for producing the roller with the covering according to one or more of claims 10 to 13, characterised in that the strip-shaped or rectangular reinforcement is wound on to a pin or laid around it, that the borders are stuck or welded thightly, that the material of the outer sleeve is then applied and that the covering prefabricated in this way is mounted on the roller core.

23. Method according to claim 22, characterised in that the borders of the reinforcement are covered with a strip of film and welded to the covering layer.

24. Method according to claim 22, characterised in that the material of the outer sleeve is poured on, rolled on or sprayed on.

25. Method according to claim 22, characterised in that the reinforcement layer is impregnated with adhesive and the covering is then applied to the roller core.

**Fig. 1**

$d_1$

7

5

8

4

1

2

3 9

**Fig. 2**

13

s

$d_2$

7

5

6

11 1 10

12

**Fig. 3**

7 5 6

**Fig. 4**

$d_1$

7

8

5

17

14

15

16

**Fig. 5**

s

7

5

13

21

$d_2$

$\underline{6}$

21

21

11

12

10

20

18

19

0 083 301

Fig.6

22  24  25

23

Fig.7

26  29

27

28

30

22

Fig.8

26

27

22

Fig.9

22  32

31 →

15